# EUROPÄISCHE PATENTSCHRIFT

(11) **EP 2 406 170 B1**
(45) Veröffentlichungstag und Bekanntmachung des Hinweises auf die Patenterteilung: **07.08.2013**
(21) Anmeldenummer: 10707834.7
(22) Anmeldetag: 05.03.2010
(51) Int. Cl.: B67C 3/20, B67C 3/24

(54) **VORRICHTUNG ZUR GEWICHTSABHÄNGIGEN BEFÜLLUNG VON BEHÄLTERN**
APPARATUS FOR FILLING CONTAINERS ACCORDING TO WEIGHT
DISPOSITIF POUR REMPLIR DES RÉCIPIENTS EN FONCTION DU POIDS

(30) Priorität: 10.03.2009 DE 102009011949
(43) Veröffentlichungstag der Anmeldung: 18.01.2012
(73) Patentinhaber: Hottinger Baldwin Messtechnik GmbH, 64293 Darmstadt (DE)
(72) Erfinder: JÄGER, Andreas, 64753 Brombachtal (DE); SCHLACHTER, Werner, 64380 Rossdorf (DE); SCHERER, Ralf, 55128 Mainz (DE)
(74) Vertreter: Staudte, Ralph
(86) Internationale Anmeldenummer: PCT/EP2010/001375
(87) Internationale Veröffentlichungsnummer: WO 2010/102756

(56) Entgegenhaltungen:
- EP-A2- 2 023 099
- EP-A2- 2 194 020
- WO-A1-00/47960
- WO-A2-2009/016499
- DE-A1- 3 904 714
- DE-T2- 69 808 118
- US-A1- 2002 178 841

## Beschreibung

Die Erfindung betrifft eine Vorrichtung zur gewichtsabhängigen Befüllung von Behältern, insbesondere Flaschen, nach dem Oberbegriff des Patentanspruchs 1. So eine Vorrichtung ist aus der WO 2009/016499 A2 bekannt.

In der Getränkeindustrie werden in sehr kurzen Zeitabschnitten große Mengen von Behältern, insbesondere Flaschen aus Glas oder Kunststoff mit Getränken oder anderen flüssigen Lebensmitteln befüllt. Auch in anderen Industriezweigen ist es häufig erforderlich, in Behälter mit verschraubbaren Einfüllöffnungen bestimmte Mengen von Flüssigkeiten abzufüllen. Dazu werden meist automatische Abfüllanlagen eingesetzt, die insbesondere in der Getränkeindustrie als Karussell- oder Rotationsfüllmaschinen ausgebildet sind. Dabei werden die Behälter oder Flaschen von einem Zuförderband auf eine Umlaufbahn am Umfang der Rotationsfüllmaschine geleitet, an der gleichmäßig verteilt eine Vielzahl von Füllstutzen oberhalb der umlaufenden Behälter angeordnet sind. Während des Umlaufs auf diesem Rotationsfüller werden dann in den Füllstutzen befindliche Ventile geöffnet und bei Erreichen eines vorgegebenen Füllstandes wieder geschlossen. Danach verlassen die befüllten und verschlossenen Behälter den Umfangsbereich des Rotationsfüllers und werden mit relativ hoher gleichmäßiger Geschwindigkeit über ein Abförderband weitergeleitet.

Eine derartige Rotations-Abfüllanlage ist aus der EP 0 893 396 B1 bekannt, die zum automatischen Befüllen von Kunststoffflaschen mit einer Flüssigkeit vorgesehen ist. Dabei werden die Flaschen auf die Umlaufbahn am Umfang der Abfüllanlage unter jeweils einen Einfüllstutzen mit einem Füllventil geleitet, wobei der Flaschenhals von einem Halteelement unter dem Einfüllstutzen fixiert wird. Während des rotatorischen Umlaufs wird nun das Füllventil geöffnet und die Flüssigkeit wird in die Flasche eingelassen, bis offensichtlich eine vorgegebene Menge eingefüllt ist. Hierbei handelt es sich offenbar um eine volumetrische Befüllung, die nicht für alle Flüssigkeiten oder Flaschen geeignet ist.

Eine gewichtsabhängige Befüllung ist aus der DE 698 08 118 T3 bekannt, die eine auskragende Gewichtsermittlung und Halterung einer Flasche unter einem Einfüllstutzen vorsieht. Dabei ist ebenfalls eine Abfüllanlage von einem Karusselltyp vorgesehen, die eine drehbare Plattform zum Befüllen der Flaschen offenbart. Diese Befüllvorrichtung ist ausschließlich für Kunststoffflaschen vorgesehen, die unterhalb ihrer rohrförmigen Einfüllöffnung um den zylindrischen Hals einen seitlich abstehenden umlaufenden Kragen aufweisen. Dazu ist eine Wägevorrichtung vorgesehen, die eine Biegebalkenwägezelle enthält. Diese ist als Doppelbiegebalken ausgebildet, der aus einem langgestreckten Vierkantstab besteht, in den seitlich zwei durchgehende horizontale Bohrungen eingelassen und durch eine dazwischen liegende Aussparung miteinander verbunden sind. Durch die seitlichen horizontalen Bohrungen entstehen zur Balkenober- und -unterseite zwei Dünnstellen, die einen Verformungskörper darstellen, an dem Dehnungsmessstreifen zur Ermittlung der Gewichtskraft appliziert sind. Dabei stellt das eine horizontale Ende des eingespannten Biegebalkens ein Kraftausleitungselement dar, das mit dem Gestell der rotierenden Abfüllanlage verbunden ist. Das gegenüber liegende Ende des Biegebalkens stellt dabei das Krafteinleitungselement dar, an dem ein Halteelement befestigt ist. Das Halteelement erstreckt sich dabei seitlich auskragend vom Biegebalken und dem Gestell der Abfüllanlage weg. Dabei besteht das Halteelement aus zwei horizontalen seitlich drehbar gelagerten flachen Backen, die mittels einer Feder zusammengehalten werden und an seinem auskragenden Ende eine runde Öffnung aufweisen. Bei den zugeführten Flaschen werden diese mit ihrem Hals so in die Öffnung geleitet, dass der Kragen auf der oberen Backenfläche aufliegt, so dass die Flaschen im Halteelement freihängend befüllbar sind. Zum Befüllen der Flaschen ist oberhalb der Öffnung ein Füllstutzen angebracht, durch den nach Öffnung eines Ventils die Flüssigkeit in die Flasche eingefüllt wird. Durch die Lagerung des Kragens auf den Backen des Halteelements wird während des rotierenden Befüllvorganges die Gewichtskraft in das Krafteinleitungselement der Wägevorrichtung eingeleitet, die starr gegenüber dem Gestell der Abfüllanlage eingespannt ist. Dadurch wird in dem Verformungskörper eine Dehnung erzeugt, die dem Gewicht der Flaschen proportional ist und die von den Dehnungsmessstreifen erfasst wird. Bei Erreichen eines vorgegebenen Füllgewichts wird dann der Zufluss durch den Füllstutzen gestoppt und der Füllvorgang ist beendet. Eine derartige Befüllvorrichtung hat den Nachteil, dass sie nur zur Befüllung von Kunststoffflaschen mit einem sich um den Hals erstreckenden Kragen geeignet ist und einen seitlich großen Bauraum für die Anordnung der stabförmigen Wägezelle benötigt.

Aus der DE 39 04 714 A1 ist zwar auch ein Kraftmessring bekannt, der nur einen geringen auskragenden Bauraum benötigt. Dieser Kraftmessring besteht aus zwei koaxial ineinander angeordneten Ringelementen, wobei das obere innenliegende Ringelement mit dem äußeren unteren Ringelement durch zwei bewegliche Biegefedern als Verformungskörper radial miteinander verbunden ist. Zur Erfassung der in den oberen Ring eingeleiteten Kraft sind die Biegefedern mit Dehnungsmessstreifen bestückt. Auch wenn dieser Kraftmessring eine durchgehende zentrale hohle Öffnung aufweist, ist nicht ersichtlich, wie dieser zur gewichtsmäßigen Befüllung von Behältern einsetzbar wäre.

Der Erfindung liegt deshalb die Aufgabe zugrunde, eine Vorrichtung zur gewichtsabhängigen Befüllung von Behältern zu schaffen, die nur einen geringen auskragenden Bauraum benötigt und auch für Behälter oder Flaschen ohne Kragen einsetzbar ist.

Diese Aufgabe wird durch die in Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass durch die ringförmige Ausbildung der Wägevorrichtung der zentrale innere Ringhohlraum zur Durchleitung der Einfüllflüssigkeit genutzt werden kann. Dadurch ist eine sehr kompakte Einfüllvorrichtung ausführbar, die sowohl in ihrer axialen Länge als auch in dem auskragenden Bereich kurzbauend ist und vorteilhafterweise nur einen geringen Bauraum erfordert, der kaum über den Durchmesser der zu befüllenden Behälter hinausgeht.

Die Erfindung hat weiterhin den Vorteil, dass durch die symmetrische Anordnung des Halteelements am Innenring der Wägevorrichtung kein Hebelarm auf das Messelement wirkt, so dass die Wägevorrichtung auch bei größeren Einfülldruckstößen nicht zugleich überlastbar ist. Die weitgehend rotationssymmetrische Ausführung der Wägevorrichtung hat zusätzlich den Vorteil, dass damit eine hohe Wägegenauigkeit erzielbar ist, da durch die zentrale Halterung und Einfüllung der Flüssigkeit in den Behälter nur geringe störende Biegemomente auf die Messeinrichtung einwirken können oder sich durch die symmetrische Anordnung kompensieren.

Die Erfindung hat zusätzlich den Vorteil, dass durch die zentrale und axiale Anordnung des Halteelements unterhalb der Wägevorrichtung damit alle Behälter mit zentralen Einfüllöffnungen gewichtsabhängig befüllbar sind, wobei es auf ein Vorhandensein eines Kragens am Behälter nicht ankommt. Gleichzeitig hat eine derartige Halterung zentral unterhalb der Wägevorrichtung den Vorteil, dass damit auch Behälter unterschiedlicher Länge befüllbar sind, ohne dass dafür Einstellungen an der Abfüllanlage notwendig wären. Bei entsprechend angepasstem Halteelement sind deshalb auch gewichtsabhängige Abfüllungen sowohl von Glasflaschen mit Kronkorken- oder Gewindehals als auch von Kunststoffflaschen nur mit Gewindehals möglich und dies bei hoher Einfüllgenauigkeit.

Ferner weist die Vorrichtung nach der vorliegenden Erfindung einen Einfüllstutzen auf, welcher von oben durch einen zentralen Hohlraum der Wägevorrichtung geführt ist.

Bei einer besonderen Ausführung der Wägevorrichtung ist vorgesehen, den radialen Innenbereich zwischen den beiden Ringelementen oben und unten durch eine einfache biegeweiche Abdeckung zu verschließen. Dies hat den Vorteil, dass dadurch eine hermetische Abdichtung der innenliegenden empfindlichen Messelemente möglich ist, ohne dass dafür ein separates Gehäuse erforderlich wäre. Bei einer besonderen Ausführung der biegeweichen Abdeckung ist zusätzlich noch eine koaxial umlaufende Entlastungsnut vorgesehen, wodurch auch noch geringfügige störende Kraftnebenschlusseffekte verringerbar sind.

Die Erfindung wird anhand eines Ausführungsbeispiels, das in der Zeichnung dargestellt ist, näher erläutert. Es zeigen:
Fig. 1 einen Ausschnitt einer Abfüllanlage mit einer daran montierten Befüllvorrichtung gemäß der vorliegenden Erfindung;
Fig. 2 eine perspektivische Draufsicht auf eine nach oben offene Wägevorrichtung;
Fig. 3 eine perspektivische Draufsicht auf eine nach unten offene Wägevorrichtung; und
Fig. 4 eine perspektivische Schnittdarstellung durch eine hermetisch abgedichtete Wägevorrichtung.

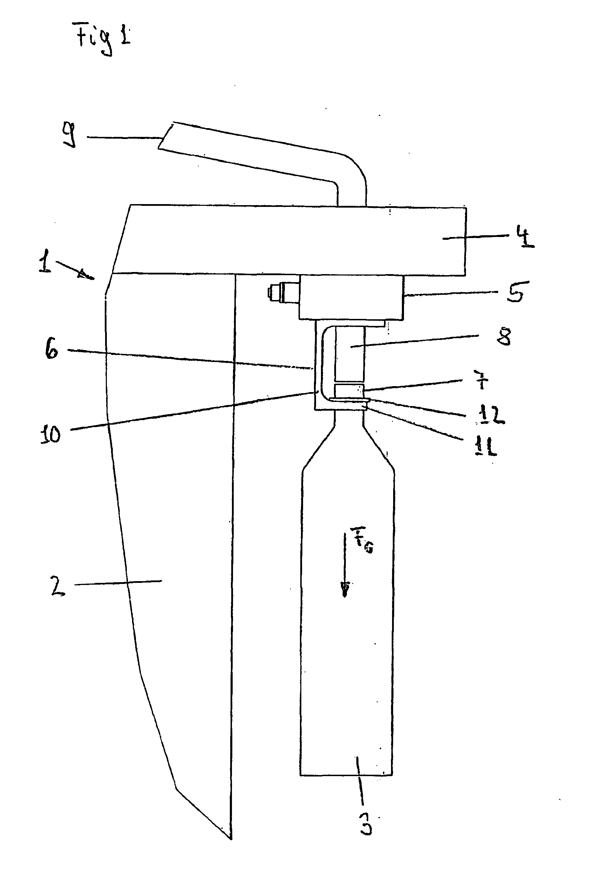

In Fig. 1 der Zeichnung ist ein Ausschnitt einer Karussell-Abfüllanlage 1 mit einer daran montierten Vorrichtung zur gewichtsabhängigen Befüllung von Flaschen 3 als Behälter dargestellt, die eine an eine Rotorplatte 4 geschraubte Wägevorrichtung 5 enthält, an der darunter ein Halteelement 6 angeordnet und von oben axial durchgehend bis zum Flaschenhals 7 ein Füllstutzen 8 zentral durch die Wägevorrichtung 5 geführt ist.

Die Karussell-Abfüllanlage 1 enthält ein im Befüllbetrieb rotierendes Maschinengestell 2, an dem als Teil oben eine Rotorplatte 4 überkragend angeordnet ist. Von einem nicht dargestellten Flüssigkeitsbehälter am Maschinengestell 2 ist zu jeder am Umfang der Rotorplatte 4 beabstandeten Befüllvorrichtung ein Füllrohr 9 angeordnet, das durch die Rotorplatte 4 und zentral durch die Wägevorrichtung 5 geführt ist und dessen Einfüllstutzen 8 oberhalb der Einfüllöffnung am. Flaschenhals 7 endet. Die Befüllvorrichtung kann aber auch an einer Linear-Abfüllanlage vorgesehen sein.

Als Halteelement 6 ist ein u-förmiger Haltebügel 10 vorgesehen, der radial zur Zuführrichtung der Flaschen 3 offen ist und zwei horizontal ausgerichtete parallele Schenkel 11 aufweist. Dabei ist der obere Schenkel 11 an der Unterseite der Wägevorrichtung 5 festgeschraubt und besitzt zur Durchführung des Einfüllstutzens 8 eine Durchführungsöffnung. Der untere Schenkel 11 des Halteelements 6 weist vorzugsweise eine nach vorne offene Aussparung auf, die mindestens dem Durchmesser des Flaschenhalses 7 entspricht. Es sind aber auch Ausführungen mit Klemmbacken und Anpassungen zur Fixierung an einem Gewinde- oder einem Kronkorkenrand als Halteelement 6 einsetzbar.

Die dargestellte Ausführung mit nach vorne offener Aussparung ist zur Auflage des am Flaschenhals 7 befindlichen Kragens 12 vorgesehen, wie er bei den derzeit gebräuchlichen Kunststoffflaschen üblich ist. Beim Befüllen der Flaschen 3 oder anderer Behälter mit einer zentralen oberen zylinderförmigen Einfüllöffnung wird durch das Gewicht der Flasche 3 und dessen jeweiligen Inhalts über das Halteelement 6 die gravimetrisch nach unten wirkende Gewichtskraft F_{G} in die Wägevorrichtung 5 eingeleitet. Bei Erreichen einer vorgegebenen Gewichtskraft F_{G} als Füllgewicht wird dann ein im Füllrohr 9 befindliches nicht dargestelltes Ventil geschlossen, so dass der Füllvorgang beendet ist und zum Beispiel eine mit einem Getränk gefüllte Flasche 3 zum Verschließen weiter befördert werden kann.

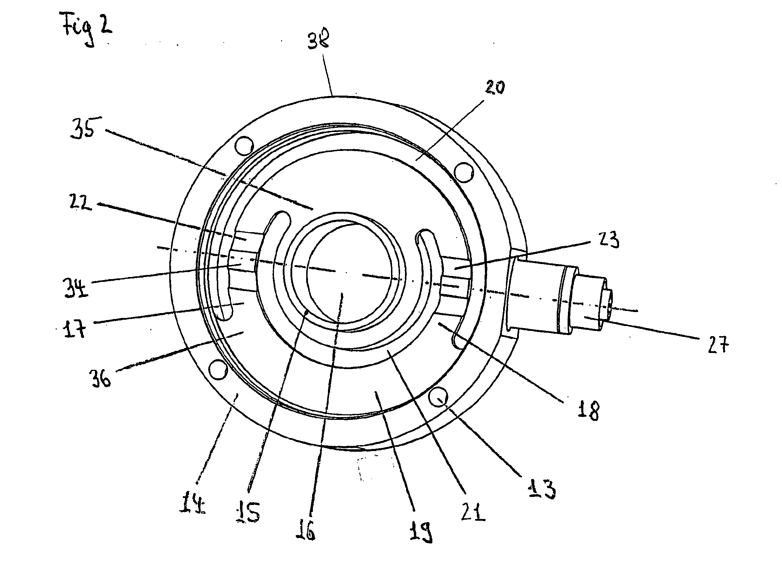

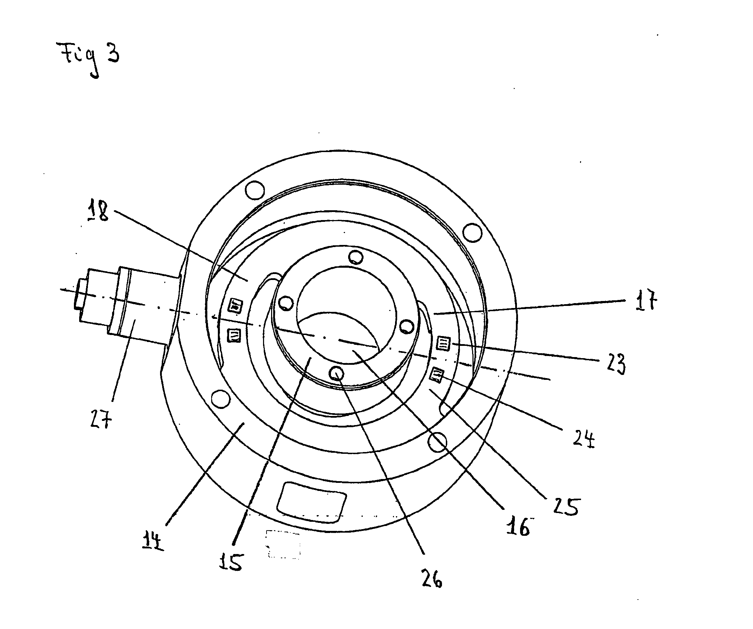

Die von unten an die Rotorplatte 4 des Maschinengestells 2 geschraubte Wägevorrichtung ist in Fig. 2 und Fig. 3 der Zeichnung im Einzelnen dargestellt. Dabei zeigt die Fig. 2 der Zeichnung eine nach oben offene Wägevorrichtung 5, mit den zur Verschraubung vorgesehenen vier symmetrisch angeordneten Durchgangsbohrungen 13. Die Wägevorrichtung 5 ist dabei als im Wesentlichen rotationssymmetrische Wägezelle ausgebildet, die als Kraftaufnahmeelement 14 ein radial äußeres Ringelement als schmalen Außenring aufweist. Die Wägezelle 5 ist dabei einstückig aus einem kurzen massiven Rundstab durch eine spanabhebende Bearbeitung herausgearbeitet und verfügt deshalb nur über eine geringe Hysterese. Der dadurch hergestellte Grundkörper 38 besteht dabei vorzugsweise aus einer federelastischen Edelstahllegierung, Aluminium oder Titan. Der Grundkörper könnte aber auch aus Keramik in PIM-Technologie (Powder Injection Molding) oder in MIM-Technologie (Metal Injection Molding) hergestellt werden, der nach dem Pulverspritzgießverfahren auf Maßhaltigkeit geschliffen werden müsste.

Koaxial innen liegend zum Außenring 14 ist als Krafteinleitungselement 15 ein radial innen liegendes Ringelement als Innenring angeordnet, der einen zylinderförmigen zentralen Hohlraum 16 umschließt, durch den der Einfüllstutzen 8 berührungslos hindurchgeführt ist. Zwischen dem Außenring 14 und dem Innenring 15 sind in einer horizontalen Mittenebene 31 vorzugsweise zwei radiale Verbindungsstege 17, 18 aus einem vorher belassenen Zwischenring 19 herausgearbeitet, die die zwei 180° radial gegenüber liegenden Verformungskörper darstellen, durch die das Kraftaufnahmeelement 14 mit dem Krafteinleitungselement 15 der Wägezelle 5 federelastisch verbunden ist.

Dazu sind in den vorherigen vollen Zwischenring 19 im Bereich des Außenrings 14 ein axial durchgehender Außenringnutabschnitt 20 auf einem Umfangsbereich von ca. 235° und 180° radial gegenüber liegend im Bereich des Innenrings 15 ein weiterer axial durchgehender Innenringnutabschnitt 21 von ebenfalls ca. 235° eingefräst. Zwischen den überschneidenden Ringnutabschnitten 20, 21 sind dadurch ein erster Verbindungssteg 17 und radial 180° gegenüberliegend ein zweiter Verbindungssteg 18 entstanden, die den Außenring 14 und den Innenring 15 radial miteinander verbinden und auf einem jeweils tangentialen Ringstegabschnitt 34 von ca. 60° konzentrisch zum Innenring 15 verlaufen. In diese beiden gegenüberliegenden konzentrischen Ringstegabschnitte 34 der Verbindungsstege 17, 18 sind von der Oberseite der Wägezelle 5 zwei parallele Quernuten 22 mit halbrundem Querschnitt eingefräst. Diese bilden jeweils zwei Dünnstellen 23 in den Verbindungsstegen 17, 18, auf deren gegenüberliegender ebener Stegfläche jeweils zwei Dehnungsmessstreifen 24 als Schubspannungsaufnehmer appliziert sind, wie dies aus Fig. 3 der Zeichnung näher ersichtlich ist.

Die Fig. 3 der Zeichnung zeigt dabei eine nach unten offene Seite der Wägezelle 5. Die Wägezelle 5 ist dabei auf ihrer Unterseite etwa symmetrisch zur Oberseite ausgebildet, wobei allerdings auf den Stegunterseiten 25 keine Quernuten 22 eingefräst sind. Dadurch können die Dehnungsmessstreifen 24 sehr genau auf den ebenen Flächen der Dünnstellen 23 appliziert werden.

Zur Montage des Haltebügels 10 ist der Innenring 15 zur Unterseite mit einer verbreiterten Wandstärke und mit vier symmetrisch verteilten Gewindebohrungen als Befestigungsbohrungen 26 versehen. Des Weiteren ist der Außenring 14 in einem schmalen Bereich seiner äußeren Mantelfläche abgeflacht, wo zum Anschluss der Wägeelektronik und der Dehnungsmessstreifen eine abgedichtete Kabeleinführung 27 angeordnet ist.

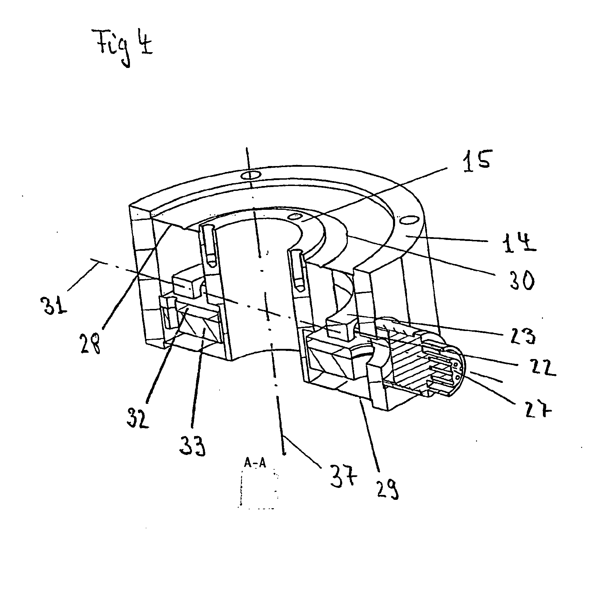

Der Anschluss zur Wägeelektronik über die Kabeleinführung 27 ist im Einzelnen aus Fig. 4 der Zeichnung ersichtlich, die die Wägezelle 5 als Seitenansicht im Schnitt darstellt. Diese Fig. 4 zeigt gleichzeitig eine besondere Ausführung der Erfindung, in der die Wägeelektronik 33 in der Wägezelle 5 integriert und der Innenraum durch zwei membranartige Abdeckungen 28, 29 hermetisch verschlossen ist. Dabei ist in Fig. 4 der Zeichnung die Wägezelle 5 umgekehrt zur Einbaulage dargestellt, wobei die Unterseite der Wägezelle 5 durch eine biegeelastische untere membranartige Abdeckung 28 abgedichtet ist, die zwischen dem Außenumfang des Innenrings 15 und dem Innenumfang des Außenrings 14 angebracht und mit diesen hermetisch dicht verschweißt ist. In gleicher Ausführung und Anordnung ist auch die obere Abdeckung 29 an der gegenüberliegenden Wägezellenseite angebracht. Die Abdeckungen 28, 29 bestehen dabei vorzugsweise aus einem membranartigen dünnen Edelstahlblech von ca. 0,1 mm Dicke, das mit den Rändern der Ringelemente 14, 15 gut verschweißbar ist. Zur Verbesserung der Wägegenauigkeit und insbesondere zur Verringerung eines möglichen Kraftnebenschlusseffektes ist in jeder Abdeckung 28, 29 eine konzentrische Entlastungsnut 30 mit einem dreieckförmigen oder halbrunden Querschnitt eingeprägt, die eine radial biegeweiche Struktur aufweist.

Des Weiteren ist oberhalb der horizontalen Mittenebene 31 noch ein radial umlaufender Haltering 32 einseitig an der Innenwand des Außenrings 14 angebracht, auf dem eine elektronische Schaltungsplatine 33 mit der Wägeelektronik befestigt ist. Hierdurch werden die Dehnungsmessstreifen 24 zu einer vorzugsweise Wheatstoneschen Messbrücke verschaltet und mit einer Speisespannung versorgt sowie die Wägesignale verstärkt, digitalisiert und zur Übertragung moduliert. Die Übertragung kann auch mit einem Bus-System erfolgen. Bei einer anderen Ausführung der Befüllvorrichtung ist die Wägeelektronik im Anschlusskabel integriert.

Der Füllvorgang in der Abfüllanlage 1 läuft wie folgt ab:
Von einem Zuführband werden die Flaschen 3 in schneller Reihenfolge der Karussell-Abfüllanlage 1 zugeführt und mit ihren Kragen 12 in den Haltebügel 10 des Halteelements 6 unter dem Einfüllstutzen 8 frei schwebend eingehängt. Dann wird während der rotatorischen Drehung der Rotorplatte 4 durch Öffnung eines Einlassventils die Flasche 3 kontinuierlich befüllt. Dabei wird das Gewicht über den Haltebügel 10 in den Innenring 15 als Krafteinleitungselement eingeleitet, dessen Kraftwirkung eine maximale Dehnung in den Dünnstellen 23 der Verbindungsstege 17, 18 bewirkt. Diese ist der Gewichtskraft F_{G} proportional und wird von den Dehnungsmessstreifen 24 in ein elektrisches Gewichtssignal umgewandelt und einer Auswerteschaltung übermittelt. Dort wird während des Füllvorgangs dieses Gewichtssignal mit einem vorgegebenen Füllgewicht verglichen und bei dessen Erreichen der Füllvorgang beendet. Bei der vorbeschriebenen Wägezelle 5 handelt es sich um eine hochgenaue eichfähige Ausführung, vorzugsweise mit einem Nenngewichtsbereich von 10 kg und einer Genauigkeit von +/- 0,5 g bis +/- 1,0 g.

Mit einer derartigen Befüllvorrichtung werden vorzugsweise Getränke in Kunststoffflaschen von 1,0 bis 1,5 1 Inhalt gefüllt, wobei damit auch Flaschen 3 und Behälter von 0,33 bis 5,0 1 Inhalt mit eichfähiger Genauigkeit befüllbar sind. Die dargestellte Ausführung der Wägezelle 5 mit einer Nennlast von 10 kg besitzt dabei vorzugsweise einen Außendurchmesser von ca. 90 mm und eine Höhe von ca. 40 mm. Dadurch können die Wägezellen 5 etwa mit dem Flaschendurchmesser von 1,5 1-Flaschen 3 nebeneinander um die Rotorplatte 4 angeordnet werden, um gleichzeitig eine größtmögliche Anzahl von Flaschen 3 oder Behältern befüllen zu können.

Der zentrale Hohlraum 16 des Innenrings 15 besitzt vorzugsweise einen Durchmesser von 27 mm, so dass dadurch übliche Füllstutzen 8 für herkömmliche Flaschenöffnungen so durchführbar sind, dass eine schnelle Befüllung gewährleistet ist, ohne dass die Gefahr einer Berührung des Krafteinleitungselements 15 besteht. Mit einer derartigen Wägezelle 5 sind bei entsprechender Dimensionierung der Verformungskörper 17, 18 aber auch Ausführungen mit kleineren Nennlasten von zum Beispiel 2 kg und größeren Nennlasten von zum Beispiel 50 kg herstellbar. Dabei ist die gewichtsabhängige Befüllvorrichtung nicht nur für Flüssigkeiten, sondern auch für rieselfähige oder staubförmige Füllmaterialien einsetzbar.

Bei der Ausführung des Halteelements 6 sind nicht nur mechanische Haltebügel 10 zur Auflage eines Flaschenkragens 12 einsetzbar, sondern sämtliche Ausführungen, bei denen der Behälter symmetrisch zur Einfüllöffnung 8 fixierbar ist. So sind auch elektrische, hydraulische, pneumatische oder magnetische Klemmsysteme denkbar, durch die die Flaschenhälse, Behältergewinde oder Dosen zentral unter dem Einfüllstutzen 8 gehalten werden können.

## Patentansprüche

1. Vorrichtung zur gewichtsabhängigen Befüllung von Behältern, insbesondere Flaschen (3) mit einem rohrförmigen Halsabschnitt (7), die aus einem Einfüllstutzen (8), einer Wägevorrichtung (5) und einem Halteelement (6) zum Halten eines Behälters (3) unterhalb des Einfüllstutzens (8) besteht und bei der die Wägevorrichtung (5) ein Kraftaufnahmeelement (14), ein Krafteinleitungselement (15) und einen dazwischen angeordneten Verformungskörper (17, 18) mit darauf applizierten Dehnungsmessstreifen (24) enthält, wobei das Kraftaufnahmeelement (14) an einem Maschinengestell (2) und das Halteelement (6) an dem Krafteinleitungselement (15) befestigt ist, **dadurch gekennzeichnet, dass** das Kraftaufnahmeelement als außenliegendes Ringelement (14) und das Krafteinleitungselement als koaxial innenliegerides Ringelement (15) ausgebildet ist, zwischen denen als Verformungskörper mindestens ein radialer federelastischer Verbindungssteg (17, 18) angeordnet ist, wobei unterhalb des innenliegenden Ringelements (15) das Halteelement (6) an diesem befestigt ist und der Einfüllstutzen (8) von oben durch einen zentralen Hohlraum (16) der Wägevorrichtung (5) geführt ist.

2. Vorrichtung nach Anspruch 1, wobei der Einfüllstutzen (8) mindestens bis zu einer Einfüllöffnung des Behälters (3) geführt ist.

3. Vorrichtung nach Anspruch 1 oder 2, wobei die Wägevorrichtung als rotationssymmetrische Wägezelle (5) ausgebildet ist, die einen einteiligen Grundkörper (38) enthält, der aus dem innenliegenden Ringelement (15) und dem koaxial umgebenden außenliegenden Ringelement (14) und dem radial dazwischen angeordneten mindestens einen Verbindungssteg (17, 18) besteht.

4. Vorrichtung nach Anspruch 3, wobei der einteilige Grundkörper (38) aus einem federelastischen Edelstahl, Aluminium, Titan oder Keramik besteht.

5. Vorrichtung nach einem der vorhergehenden Ansprüche, wobei das außenliegende Ringelement (14) und das innenliegende Ringelement (15) durch zwei radial um 180° gegenüberliegende Verbindungsstege (17, 18) in einer horizontalen Mittenebene (31) kraftschlüssig miteinander verbunden sind.

6. Vorrichtung nach einem der vorhergehenden Ansprüche, wobei jeder Verbindungssteg (17, 18) aus einem ersten radialen Stegabschnitt (35), der mit dem innenliegenden Ringelement (15) verbunden ist, und einem zweiten radialen Stegabschnitt (36), der mit dem außenliegenden Ringelement (14) verbunden ist, und einem dazwischenliegenden tangentialen Ringstegabschnitt (34) besteht.

7. Vorrichtung nach Anspruch 6, wobei jeder tangentiale Ringstegabschnitt (34) zwei tangential beabstandete Quernuten (22) aufweist, die zwei federelastische Dünnstellen (23) bilden, an denen die Dehnungsmessstreifen (24) appliziert sind.

8. Vorrichtung nach Anspruch 7, wobei die Verbindungsstege (17, 18) durch zwei radial gegenüberliegende axial durchgehende Ringnutabschnitte (20, 21) gebildet werden, wobei ein Innenringnutabschnitt (21) am innenliegenden Ringelement (15) und ein Außenringnutabschnitt (20) am außenliegenden Ringelement (14) verläuft.

9. Vorrichtung nach Anspruch 8, wobei beide Ringnutabschnitte (20, 21) sich auf einen radialen Winkelbereich der Wägezelle (5) von ca. 235° erstrecken und sich an ihren Enden auf einem Bereich von ca. 60° überschneiden, wobei sich die tangentialen Ringstegabschnitte (34) auf einen tangentialen Winkelbereich von ca. 60° erstrecken.

10. Vorrichtung nach einem der vorhergehenden Ansprüche, wobei der zentrale Hohlraum (16) durchgehend und symmetrisch zu einer Längsachse (37) der Wägezelle (5) ist sowie zur berührungslosen Durchführung des Einfüllstutzens (8) dient.

11. Vorrichtung nach einem der vorhergehenden Ansprüche, wobei das außenliegende Ringelement (14) und das innenliegende Ringelement (15) an ihren axialen Endbereichen mit einer unteren Abdeckung (28) und einer oberen Abdeckung (29) hermetisch dicht verbunden sind.

12. Vorrichtung nach Anspruch 11, wobei die Abdeckungen (28, 29) jeweils aus einem membranartigen dünnen Blech bestehen, das mit den Ringelementen (14, 15) verschweißt ist.

13. Vorrichtung nach Anspruch 11 oder 12, wobei die Abdeckungen (28, 29) mindestens eine konzentrische zum innenliegenden Ringelement (15) eingeprägte Entlastungsnut (30) aufweisen, die eine radial biegeweiche Struktur besitzt.

14. Vorrichtung nach einem der vorhergehenden Ansprüche, wobei im Innenraum der Wägezelle (5) oberhalb oder unterhalb einer Mittenebene (31) mindestens ein einseitig am außenliegenden Ringelement (14) befestigter Haltering (32) vorgesehen ist, an dem eine elektronische Schaltungsplatine (33) mit einer Wägeelektronik befestigt ist.

15. Vorrichtung nach einem der vorhergehenden Ansprüche, wobei an einer Mantelfläche des außenliegenden Ringelements (14) eine abgedichtete Kabeleinführung (27) angeordnet ist, die zum Anschluss einer Wägeelektronik dient oder bei der die Wägeelektronik im Anschlusskabel integriert ist.

16. Vorrichtung nach einem der vorhergehenden Ansprüche, wobei das Halteelement (6) als radial nach außen offener u-förmiger Haltebügel (10) ausgebildet ist, dessen unterer horizontal ausgerichteter Schenkel (11) eine nach außen radial offene Aussparung aufweist, die zur Aufnahme des rohrförmigen Halsabschnitts (7) des Behälters und/oder zur vertikalen Fixierung des Behälters dient.

## Claims

1. Apparatus for the weight-dependent filling of containers, especially bottles (3) having a tubular neck section (7), said apparatus comprising a fill nozzle (8), a weighing device (5) and a holding element (6) for holding a container (3) under the fill nozzle (8), wherein the weighing device (5) comprises a force receiving element (14), a force introducing element (15) and a deformation element (17, 18) arranged therebetween and provided with strain gauges (24), wherein the force receiving element (14) is fastened to a machine frame (2) and the holding element (6) is fastened to the force introducing element (15), **characterized in that** the force receiving element is formed as an outwardly lying annular element (14) and the force introducing element is formed as a coaxial inwardly lying annular element (15), between which at least one radial spring-elastic connecting web (17, 18) is arranged as the deformation element, wherein the holding element (6) is fastened to the inwardly lying annular element (15) at the bottom side thereof and the fill nozzle (8) is guided from the top through a central hollow space (16) of the weighing device (5).

2. Apparatus according to claim 1, wherein the fill nozzle (8) is guided at least to a fill opening of the container (3).

3. Apparatus according to claim 1 or 2, wherein the weighing device is formed as a rotationally symmetrical weighing cell (5), which comprises a one-piece base body (38) consisting of the inwardly lying annular element (15) and the coaxially surrounding outwardly lying annular element (14) and the at least one connecting web (17, 18) arranged radially therebetween.

4. Apparatus according to claim 3, wherein the one-piece base body (38) consists of a spring-elastic stainless steel, aluminium, titanium or ceramic.

5. Apparatus according to any of the preceding claims, wherein the outwardly lying annular element (14) and the inwardly lying annular element (15) are connected with one another in a force-locking manner by two connecting webs (17, 18) lying radially 180° opposite one another in a horizontal central plane (31).

6. Apparatus according to any of the preceding claims, wherein each connecting web (17, 18) consists of a first radial web section (35) that is connected with the inwardly lying annular element (15) and a second radial web section (36) that is connected with the outwardly lying annular element (14), and a tangential ring web section (34) lying therebetween.

7. Apparatus according to claim 6, wherein each tangential ring web section (34) comprises two tangentially spaced-apart transverse grooves (22), which form two spring-elastic thin locations (23), on which the strain gauges (24) are applied.

8. Apparatus according to claim 7, wherein the connecting webs (17, 18) are formed by two axially through-going annular groove sections (20, 21) that lie radially opposite one another, wherein an inner annular groove section (21) extends on the inwardly lying annular element (15) and an outer annular groove section (20) extends on the outwardly lying annular element (14).

9. Apparatus according to claim 8, wherein both annular groove sections (20, 21) extend on a radial angular range of the weighing cell (5) of approximately 235° and overlap one another on their ends on a range of approximately 60°, whereby the tangential ring web sections (34) extend on a tangential angular range of approximately 60°.

10. Apparatus according to any of the preceding claims, wherein the central hollow space (16) extends through-going and symmetrically to a longitudinal axis (37) of the weighing cell (5) and serves for the non-contact trough-guidance of the fill nozzle (8).

11. Apparatus according to any of the preceding claims, wherein the outwardly lying annular element (14) and the inwardly lying annular element (15) are connected at their axial end areas with a lower cover (28) and an upper cover (29) in a hermetically-sealed manner.

12. Apparatus according to claim 11, wherein the covers (28, 29) respectively consist of a diaphragm-like thin metal sheet, which is welded to the annular elements (14, 15).

13. Apparatus according to claim 11 or 12, wherein the covers (28, 29) comprise at least one load relief groove (30), which is embossed therein concentrically to the inwardly lying annular element (15), and which has a radially flexurally soft structure.

14. Apparatus according to any of the preceding claims, wherein at least one holding ring (32), which is fastened on one side to the outwardly lying annular element (14), is provided in the inside space of the weighing cell (5) above or below a central plane (31), and an electronic circuit board (33) with a weighing electronics is fastened to the holding ring.

15. Apparatus according to any of the preceding claims, wherein a sealed cable inlet (27) is arranged on a circumferential surface of the outwardly lying annular element (14), which serves for the connection of a weighing electronics or regarding which the weighing electronics is integrated in the connection cable.

16. Apparatus according to any of the preceding claims, wherein the holding element (6) is formed as a radially outwardly open U-shaped holding bail (10), of which the lower horizontally oriented leg (11) has a radially outwardly open recess that serves for receiving the tubular neck section (7) of the container and/or for vertically fixing the container.

## Revendications

1. Dispositif pour remplir des récipients en fonction du poids, en particulier des bouteilles (3) ayant une portion de col (7) de forme tubulaire, ledit dispositif comprenant une buse de remplissage (8), un dispositif de pesée (5) et un élément de retenue (6) pour maintenir un récipient (3) sous la buse de remplissage (8), ledit dispositif de pesée (5) comprenant un élément de réception de force (14), un élément d'introduction de force (15) et un corps de déformation (17, 18) qui est disposé entre ceux-ci et sur lequel sont appliquées des jauges de contrainte (24), dans lequel l'élément de réception de force (14) est fixé à un bâti de machine (2) et l'élément de retenue (6) est fixé à l'élément d'introduction de force (15), **caractérisé en ce que** l'élément de réception de force est configuré comme un élément annulaire extérieur (14) et l'élément d'introduction de force est configuré comme un élément annulaire coaxialement intérieur (15), entre lesquels est disposée en tant que corps de déformation au moins une branche de liaison (17, 18) radiale à élasticité de ressort, dans lequel l'élément de retenue (6) est fixé à l'élément annulaire intérieur (15) par en-dessous et la buse de remplissage (8) est guidée d'en haut à travers une cavité centrale (16) du dispositif de pesée (5).

2. Dispositif selon la revendication 1, dans lequel la buse de remplissage (8) est guidée au moins jusqu'à un orifice de remplissage du récipient (3).

3. Dispositif selon la revendication 1 ou 2, dans lequel le dispositif de pesée est configuré comme une cellule de pesée (5) à symétrie de révolution, qui comprend un corps de base monobloc (38) constitué de l'élément annulaire intérieur (15) et de l'élément annulaire extérieur (14) entourant d'une manière coaxiale, et de ladite au moins une branche de liaison (17, 18) disposée radialement entre ceux-ci.

4. Dispositif selon la revendication 3, dans lequel le corps de base monobloc (38) est constitué d'un acier fin à élasticité de ressort, d'aluminium, de titane ou de céramique.

5. Dispositif selon l'une quelconque des revendications précédentes, dans lequel l'élément annulaire extérieur (14) et l'élément annulaire intérieur (15) sont connectés entre eux par liaison de force dans un plan médian (31) horizontal par deux branches de liaison (17, 18) radialement opposées à 180°.

6. Dispositif selon l'une quelconque des revendications précédentes, dans lequel chaque branche de liaison (17, 18) est constituée d'une première portion de branche radiale (35) qui est connectée avec l'élément annulaire intérieur (15) et d'une deuxième portion de branche radiale (36) qui est connectée avec l'élément annulaire extérieur (14), et d'une portion de branche annulaire tangentielle (34) disposée entre elles.

7. Dispositif selon la revendication 6, dans lequel la portion de branche annulaire tangentielle (34) comprend deux rainures transversales (22) tangentiellement espacées, lesquelles forment deux régions amincies (23) à élasticité de ressort sur lesquelles sont appliquées les jauges de contrainte (24).

8. Dispositif selon la revendication 7, dans lequel les branches de liaison (17, 18) sont formées par deux portions de rainure annulaires (20, 21) axialement traversantes et radialement opposées, dans lequel une portion de rainure annulaire intérieure (21) s'étend sur l'élément annulaire intérieur (15) et une portion de rainure annulaire extérieure (20) s'étend sur l'élément annulaire extérieur (14).

9. Dispositif selon la revendication 8, dans lequel les deux portions de rainure annulaires (20, 21) s'étendent sur un domaine angulaire radial de la cellule de pesée (5) d'environ 235° et se chevauchent à leurs extrémités sur un domaine d'environ 60°, dans lequel les portions de branche annulaire tangentielles (34) s'étendent sur un domaine angulaire tangentiel d'environ 60°.

10. Dispositif selon l'une quelconque des revendications précédentes, dans lequel la cavité centrale (16) est traversante et symétrique à un axe longitudinal (37) de la cellule de pesée (5) et sert à la traversée sans contact de la buse de remplissage (8).

11. Dispositif selon l'une quelconque des revendications précédentes, dans lequel l'élément annulaire extérieur (14) et l'élément annulaire intérieur (15) sont connectés de manière hermétiquement étanche à leurs régions terminales axiales avec un revêtement inférieur (28) et un revêtement supérieur (29)

12. Dispositif selon la revendication 11, dans lequel les revêtements (28, 29) comprennent respectivement une mince feuille de type membranaire qui est soudée aux éléments annulaires (14, 15).

13. Dispositif selon la revendication 11 ou 12, dans lequel les revêtements (28, 29) comprennent au moins une rainure de décharge (30) qui est ciselée et concentrique autour de l'élément annulaire intérieur (15), et qui possède une structure radialement flexible.

14. Dispositif selon l'une quelconque des revendications précédentes, dans lequel est prévue dans l'espace intérieur de la cellule de pesée (5) situé au-dessus ou au-dessous d'un plan médian (31), au moins une bague de retenue (32) fixée sur un côté à l'élément annulaire extérieur (14) et à laquelle est fixée une plaquette à circuits imprimés (33) dotée d'un dispositif électronique de pesée.

15. Dispositif selon l'une quelconque des revendications précédentes, dans lequel est disposée sur une surface d'enveloppe de l'élément annulaire extérieur (14) une entrée de câble (27) étanche, laquelle sert à la connexion d'un dispositif électronique de pesée ou concernant laquelle, le dispositif électronique de pesée est intégré dans le câble de connexion.

16. Dispositif selon l'une quelconque des revendications précédentes, dans lequel l'élément de retenue (6) est configuré comme un étrier de retenue (10) en forme de U et radialement ouvert vers l'extérieur, dont la branche (11) inférieure qui est horizontalement orientée comprend un évidement qui est ouvert radialement vers l'extérieur et qui sert à la réception de la portion de col (7) de forme tubulaire du récipient et/ou à la fixation verticale du récipient.
